# EUROPEAN PATENT APPLICATION

(11) **EP 3 605 297 A1**
(43) Date of publication of application: **05.02.2020**
(21) Application number: 18770966.2
(22) Date of filing: 06.03.2018
(51) Int. Cl.: G06F 3/0482, G06F 3/0484, G09G 5/00, G09G 5/02, G09G 5/36, G09G 5/38

(54) **DISPLAY CONTROL DEVICE, DISPLAY CONTROL METHOD, AND DISPLAY CONTROL PROGRAM**

(30) Priority: 23.03.2017 JP 2017057833
(71) Applicant: Pioneer Corporation, Tokyo 113-0021 (JP)
(72) Inventor: HARADA Kohei, Tokyo 113-0021 (JP)
(74) Representative: Isarpatent
(86) International application number: PCT/JP2018/008558
(87) International publication number: WO 2018/173740

(57) **Abstract**

Provided is a display control device with which it is possible to speedily establish, at a glance, evaluations of content being selected and the number of the evaluations. This invention is provided with: an interface 1 for acquiring, for each track relating to an album, evaluation information indicating the evaluation of the track; objects visually representing the evaluation of at least some of the tracks, the number of objects corresponding to the number of tracks included in the at least some of the tracks; and a processing unit 2 for displaying album information indicating the album to which the tracks are related, the album information being displayed on a display D on the basis of the evaluation information so as to mutually correspond.

## Description

### Technical Field

The present application relates to a display control apparatus, a display control method, and a display control program. More specifically, the application relates to a display control apparatus which controls displaying in a display means such as a liquid crystal display, a display control method, and a program for the display control apparatus.

### Background Art

In recent years, lots of information is displayed in various display modes in an in-vehicle navigation apparatus or a so-called smartphone. In addition, even in a case where a content such as music recorded in the navigation apparatus is selected and viewed, various types of information is displayed for selection. Herein, if each content of a select target is evaluated in advance when the content is selected, a preferred content can be selected with reference to the evaluation, which increases convenience. As an example of the related art, there are the following Patent Literature 1 and Patent Literature 2.

At this time, in the technique disclosed in Patent Literature 1, the evaluation value of each of a plurality of tourist spots (select targets) is represented by the number of "★" marks. In addition, even in the technique disclosed in Patent Literature 2, the evaluation value of each of a plurality of restaurants and music (select targets) is represented by the number of "★" marks.

### Citation List

### Patent Literature

Patent Literature 1: JP 2008-33399 A
Patent Literature 2: JP 2014-119861 A

### Summary of Invention

### Technical Problem solved by the invention

However, in both the techniques disclosed in Patent Literature 1 and Patent Literature 2 described above, the evaluation value of the select target is displayed simply with the number of "★" marks. Therefore, the number of select targets having the evaluation value is not able to be recognized quickly together with the evaluation. This causes a more serious problem considering the recent trend that time for viewing the display screen of the navigation apparatus and the smartphone should be reduced as much as possible.

Therefore, the application has been made in view of the above problem, and an example of the object thereof is to provide a display control apparatus in which the evaluation on a content of a select target and the number thereof can be quickly recognized at a glance, a display control method, and a program for the display control apparatus.

### Solution to solve the Problem

For solving the problem, the invention described in claim 1 is a display control apparatus, comprising: an acquisition means which acquires evaluation information indicating evaluation on a second content related to a first content for each second content; and a control means which displays objects which visually and respectively represent the evaluation indicated by the evaluation information with respect to at least a part of the second content, the number of the objects corresponding to the number of the second contents contained in the at least a part, and first content information indicating the first content related to the second content in a display means in association with each other.

For solving the problem, the invention described in claim 7 is a display control apparatus, comprising: a first control means which lists first content information indicating a first content in a display means according to an attribute of the first content; an acquisition means which acquires evaluation information indicating evaluation on a second content related to the first content for each second content; and a second control means which displays an evaluation-added image in which an object visually representing the evaluation on the second content related to the first content represented by the displayed first content information is added to an image indicating the second content on the basis of the acquired evaluation information at a position of the display means corresponding to a display position of the first content information.

For solving the problem, the invention described in claim 12 is a display control method which is performed in a display control apparatus which includes an acquisition means and a control means, and is connected to a display means, comprising: an acquisition step of acquiring, by an acquisition means, evaluation information indicating evaluation on a second content related to a first content for each second content; and a control step of displaying, by a control means, objects which visually and respectively represent the evaluation indicated by the evaluation information with respect to at least a part of the second content, the number of the objects corresponding to the number of the second contents contained in the at least a part, and first content information indicating the first content related to the second content in a display means in association with each other.

For solving the problem, the invention described in claim 13 is a display control method which is performed in a display control apparatus, the display control apparatus comprising a first control means, an acquisition means, and a second control means, and being connected to a display means, the method comprising: a first control step of listing, by the first control means, first content information indicating a first content in the display means according to an attribute of the first content; an acquisition step of acquiring, by the acquisition means, evaluation information indicating evaluation on a second content related to the first content for each second content; and a second control step of displaying, by the second control means, an evaluation-added image in which an object which visually represents the evaluation on the second content related to the first content represented by the displayed first content information is added to an image indicating the second content on the basis of the acquired evaluation information at a position of the display means corresponding to a display position of the first content information.

For solving the problem, the invention described in claim 14 is a display control program which causes a computer connected to a display means to serve as the display control apparatus according to any one of claims 1 to 11.

### Brief Description of Drawings

Fig. 1 is a block figure illustrating a schematic configuration of a display control apparatus according to an embodiment.
Fig. 2 is a block figure illustrating a schematic configuration of an information processing apparatus according to an example.
Fig. 3 is a flowchart illustrating a display process according to an example.
Fig. 4 is a figure illustrating a display example of an artist list according to an example.
Fig. 5 is a figure (I) illustrating a display example when selecting an artist according to an example.
Fig. 6 is a figure (II) illustrating a display example when selecting an artist according to an example.
Fig. 7 is a figure illustrating an example of a display transition to an album list according to an example.
Fig. 8 is a figure illustrating a display example of the album list according to an example.
Fig. 9 is a figure illustrating a display example when selecting an album according to an example.
Fig. 10 is a figure (I) illustrating an example of the display transition to a music list according to an example.
Fig. 11 is a figure (II) illustrating an example of the display transition to the music list according to an example.
Fig. 12 is a figure (III) illustrating an example of the display transition to the music list according to an example.
Fig. 13 is a figure (IV) illustrating an example of the display transition to the music list according to an example.
Fig. 14 is a figure illustrating the display example of the music list according to an example.

### Description of Embodiments

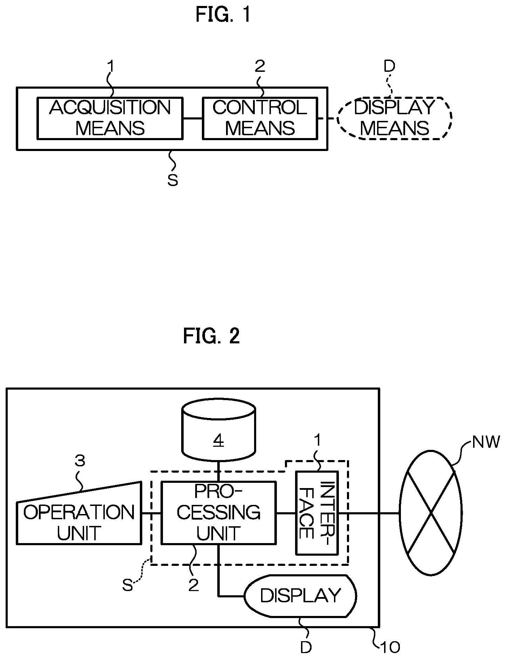

Next, modes for carrying out the present application will be described using Fig. 1. Further, Fig. 1 is a block figure illustrating a schematic configuration of a display control apparatus according to an embodiment.

As illustrated in Fig. 1, a display control apparatus S according to the embodiment is configured to include an acquisition means 1 and a control means 2 which is connected to a display means D.

In this configuration, the acquisition means 1 acquires evaluation information indicating evaluation on a second content related to a first content for each second content.

Then, the control means 2 causes the display means D to display objects which visually represent the evaluation indicated by the evaluation information on at least a part of the second content and correspond to the number the number of the second contents contained at least in the part, and first content information indicating the first content related to the second content in association with each other.

As described above, according to the operation of the display control apparatus S of this embodiment, the evaluation information indicating evaluation on the second content related to the first content is acquired for each second content. Then, the objects which visually represent the evaluation indicated by the evaluation information on at least a part of the second content and are as many as the second content contained at least in the part, and the first content information indicating the first content related to the second content are displayed in association with each other. Therefore, it is possible to promptly recognize the evaluation on the second content related to the first content and the number at a glance.

### Examples

Next, specific examples corresponding to the above embodiment will be described using Figs. 2 to 14. Further, the following example is an example in a case where the embodiment is applied to a display control in an information processing apparatus which displays a music list in an album of an artist.

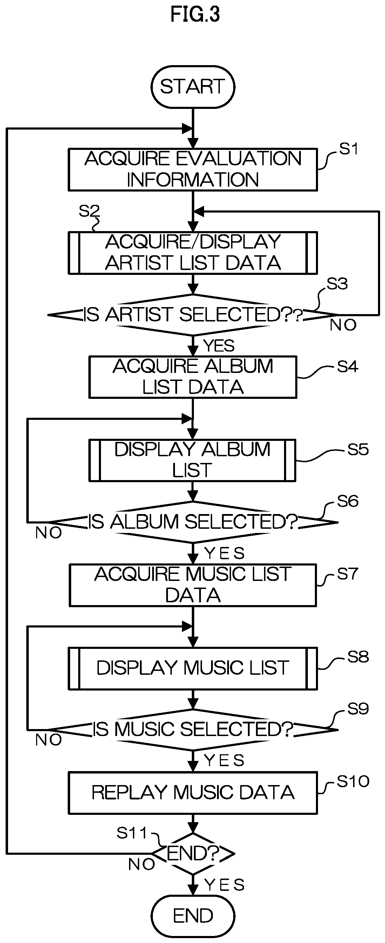

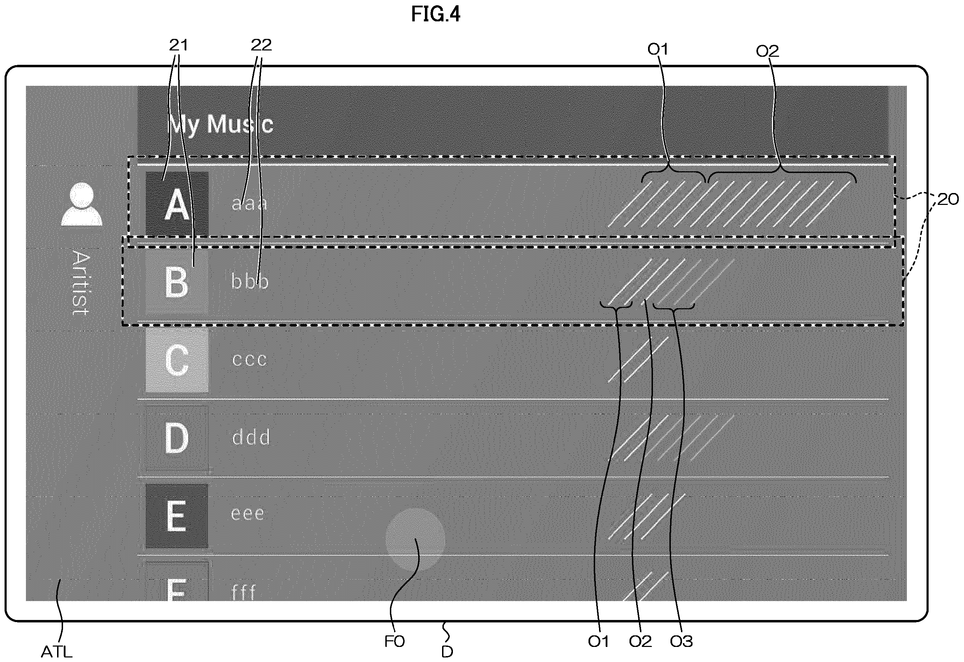

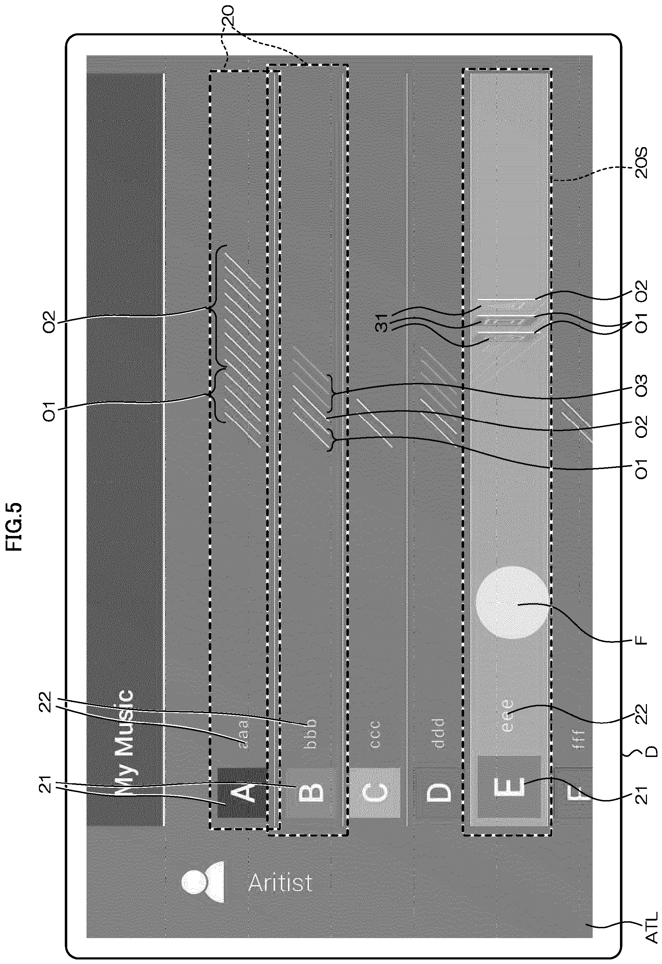

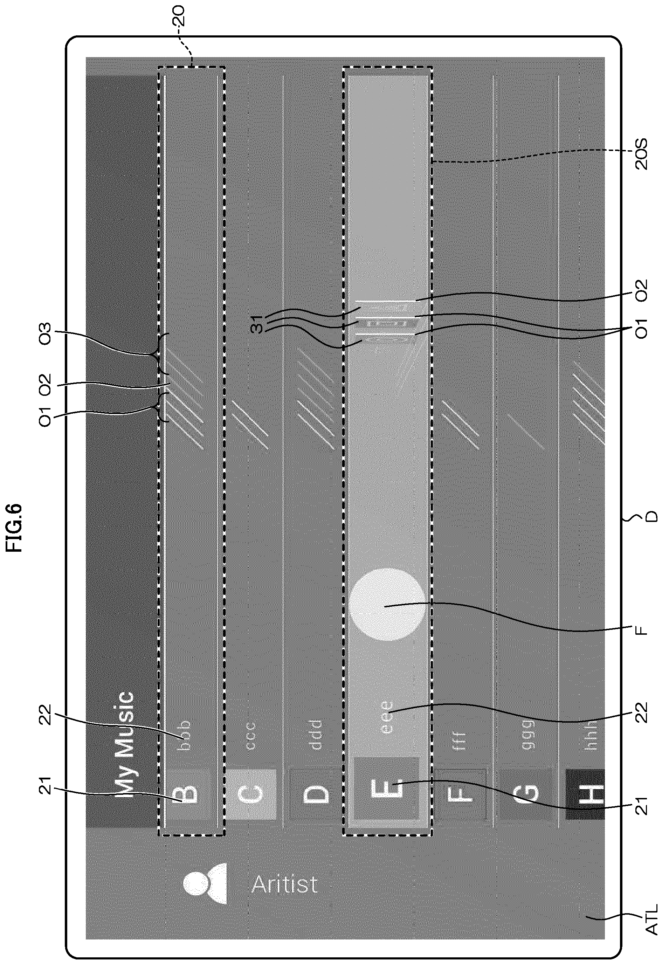

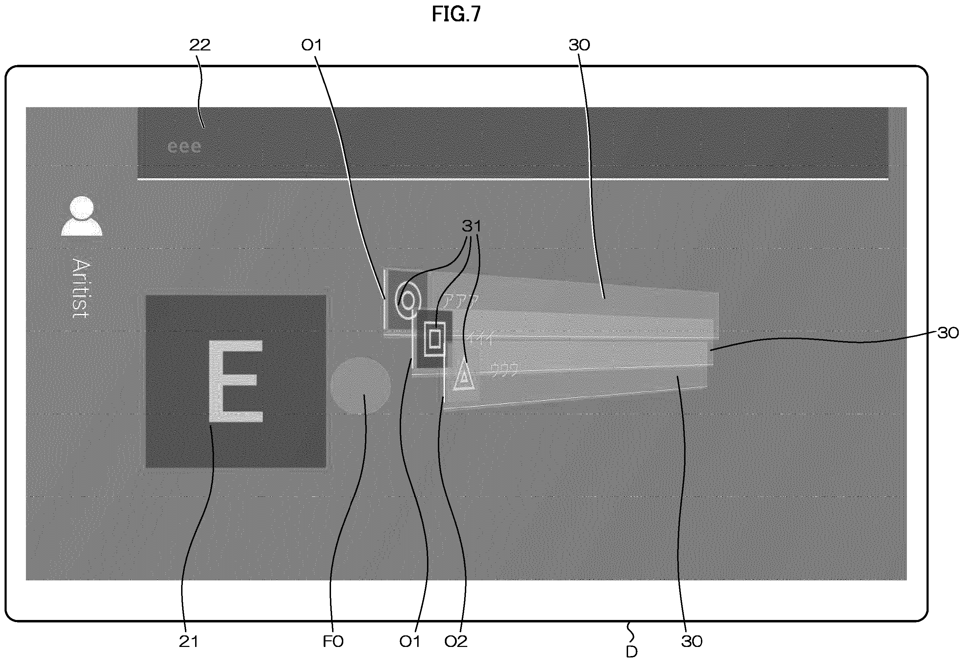

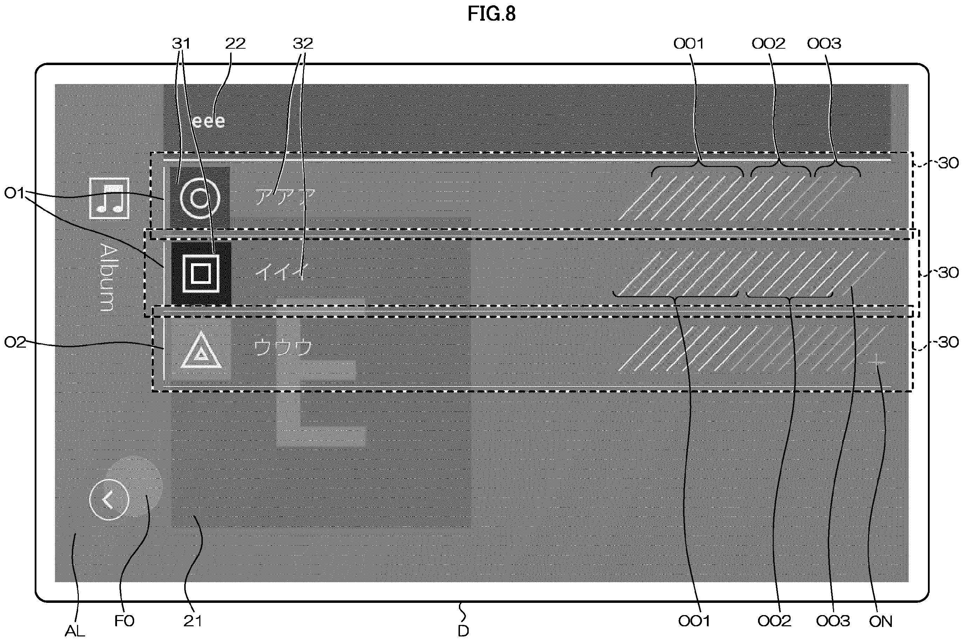

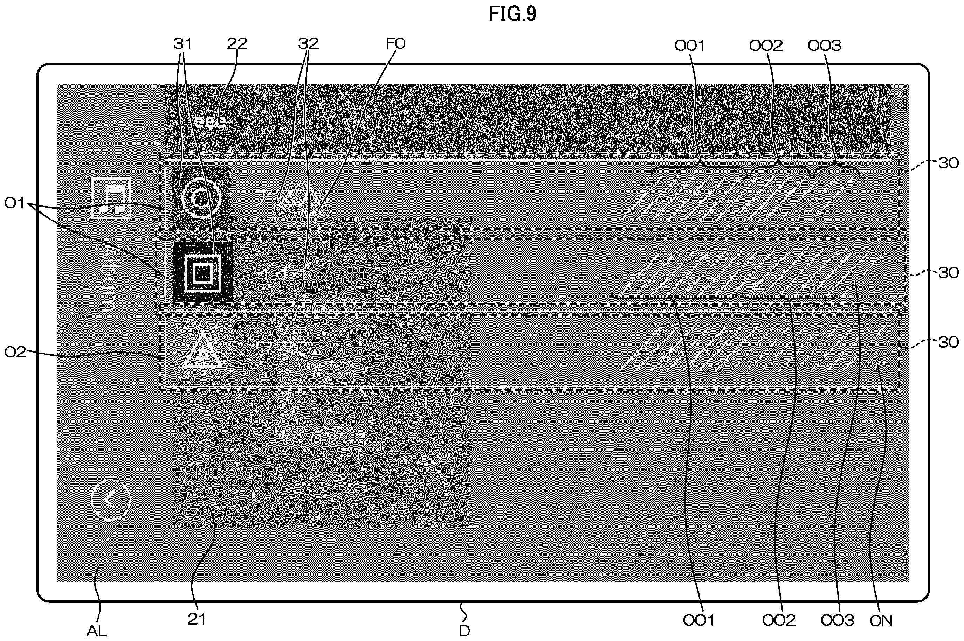

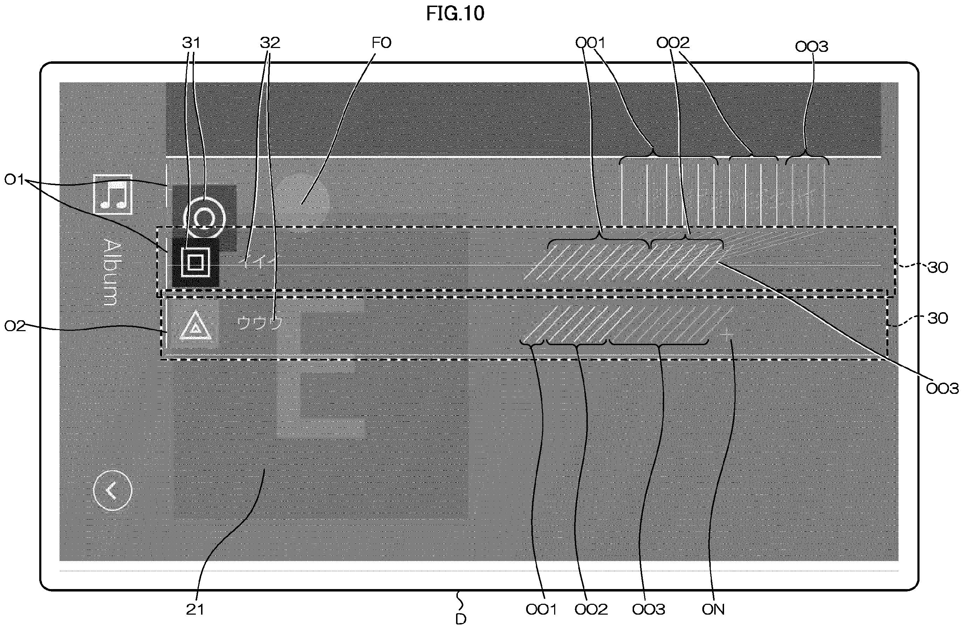

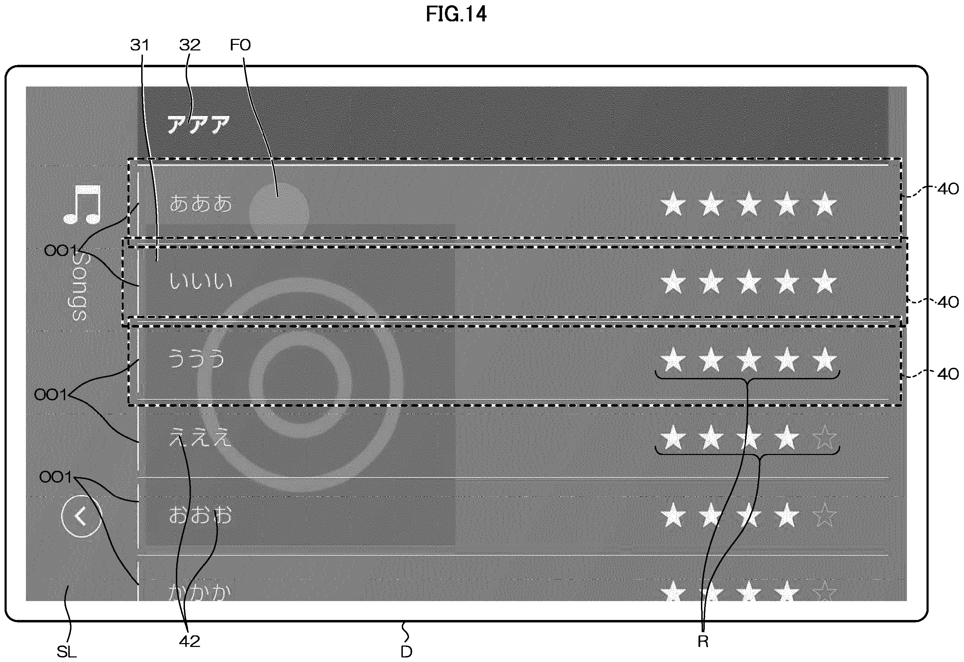

In addition, Fig. 2 is a block figure illustrating a schematic configuration of the information processing apparatus according to the example, Fig. 3 is a flowchart illustrating a display process according to the example, and Fig. 4 is a figure illustrating a display example of an artist list according to the example. Further, Figs. 5 and 6 are figures each illustrating the display example when selecting the artist according to the example, Fig. 7 is a figure illustrating an example of a display transition to an album list according to the example, Fig. 8 is a figure illustrating the display example of the album list, and Fig. 9 is a figure illustrating the display example when selecting the album according to the example. In addition, Figs. 10 to 13 are figures each illustrating an example of the display transition to the music list according to the example, and Fig. 14 is a figure illustrating the display example according to the example. At this time, in Fig. 2, the components of the example corresponding to those in the display control apparatus S according to the embodiment illustrated in Fig. 1 will be described using the same symbol as those in the display control apparatus S.

As illustrated in Fig. 2, an information processing apparatus 10 according to the example includes an interface 1 as an example of the acquisition means 1 according to the embodiment, a processing unit 2 as an example of the control means 2 according to the embodiment which is configured by a CPU, a Random Access Memory (RAM), a Read Only Memory (ROM), or the like, an operation unit 3 as an example of "reception means" according to the present application, a recording unit 4 which is configured by a Hard Disc Drive (HDD), a Solid State Drive (SSD), or the like and a display D as an example of the display means D according to the embodiment which is configured by a liquid crystal display or the like. Then, as illustrated with a broken line in Fig. 2, an example of the display control apparatus S according to the embodiment is configured by the interface 1 and the processing unit 2. In addition, the processing unit 2 corresponds to each of an example of "first control means" and an example of "second control means" according to the application.

At this time, the interface 1 is connected to a network NW such as the Internet. In addition, the operation unit 3 includes a touch panel (not illustrated) which is provided in the display surface of the display D. Further, in the recording unit 4, data of the music which is output from a speaker (not illustrated) of the information processing apparatus 10, data related to the album where the music is included, data related to the artist who creates the album, and the like are recorded in a non-volatile manner.

Herein, the music data includes data indicating a title of the music, data indicating a playback time of the music, data of a so-called jacket photo of the music, data of the music itself, and the like. In addition, the data related to the album includes data indicating a title of the album, name data of an artist who creates the album, data indicating a total playback time of the album, data of a jacket photo as the album, and the like. Further, the data related to the artist includes data indicating the artist name, data indicating a profile of the artist, data of a photo of the artist, and the like. Further, these pieces of data recorded in the recording unit 4 may be acquired through the network NW as appropriate. In addition, in a case where the artist corresponds to the example of the "first content" according to the application, the album corresponds to the example of the "second content" according to the application. Further, in a case where the album corresponds to the example of the "first content" according to the application, the music corresponds to the example of the "second content" according to the application.

In the above configuration, if an artist is selected, an album is selected, or the like using the operation unit 3 and the touch panel provided in the operation unit 3, the processing unit 2 uses the data recorded in the recording unit 4 to perform a display process which corresponds to the operation and the like and selects music related to the example on the display D. At this time, the evaluation information (described below) required for the display process is acquired through the network NW and the interface 1. Then, the music selected by the display process is emitted through the speaker (not illustrated).

Next, the display process according to the example which is performed mainly in the processing unit 2 will be specifically described using Figs. 3 to 14.

In a flowchart illustrated in Fig. 3, the display process according to the example starts when an operation of displaying a list of artists recorded in the recording unit 4 is performed in the operation unit 3. Then, when the operation is performed, first the processing unit 2 acquires music evaluation information indicating an evaluation on each music recorded in the recording unit 4, and album evaluation information indicating an evaluation on each album similarly recorded in the recording unit 4 through the network NW and the interface 1 (Step S1). The album evaluation information corresponds to the example of the "first content evaluation information" according to the application. Further, the evaluation information recorded in advance in the recording unit 4 may be used as each piece of the evaluation information. Next, the processing unit 2 acquires data of the list of artists to be displayed from the recording unit 4, and generates an artist list ATL as illustrated in Fig. 4 using the acquired data and the album evaluation information acquired in Step S1, and displays the artist list on the display D (Step S2).

At this time, in the artist list ATL according to the example, artist information 20 containing an artist image 21 and an artist name 22 is displayed in a list format for each artist of which the data is recorded in the recording unit 4 as illustrated in Fig. 4. Then, in the artist information 20 according to the example, objects 01 to O3 of a rod shape visually representing the album of the artist are contained. Further, in the following description, in a case where any one of the objects 01 to O3 is denoted, the object will be appropriately referred to as "object O". At this time, each object O corresponds to an album of the artist. In addition, each object O is displayed with the color indicating the evaluation of each album which is divided into three hierarchies on the basis of the album evaluation information acquired in Step S1. Then, the object O1 is displayed with the color indicating an album which obtains a highest evaluation, the object O2 is displayed with the color indicating an album which obtains a second highest evaluation, and the object O3 is displayed with the color indicating an album which obtains a third highest evaluation. Herein, the display color of each object O is set to a color (for example, a complementary color to a background color) which makes the display color of the object 01 most visible in relation with the background color of the artist list ATL, the display color of the object O2 is set to a secondly visible color, and the display color of the object O3 is set to a thirdly visible color. As a result, the number of albums of the artist and the evaluation of each album are displayed at the same time by each object O. More specifically, in the artist list ATL illustrated in Fig. 4, for example, total 13 albums of the artist "aaa" are recorded in the recording unit 4. It can be seen at a glance that, among the albums, four albums with the highest evaluation are recorded, nine albums with the second highest evaluation are recorded. In addition, similarly, total six albums of the artist "bbb" are recorded in the recording unit 4. It can be seen at a glance that, among the albums, two albums with the highest evaluation are recorded, one album with the second highest evaluation is recorded, and three albums with the third highest evaluation are recorded.

Further, in the following description, the position of a finger touching the touch panel of the surface of the display D will be denoted as "Position F", and the position of a finger moving near the front surface of the touch panel (without touching the touch panel) will be denoted as "Position F0". In addition, the artist image 21 and the artist name 22 correspond to an example of the "first content information" according to the application.

In a state where the artist list ATL illustrated in Fig. 4 is displayed (see Step S2), the processing unit 2 monitors whether any piece of artist information 20 is selected by a user's touching operation (Step S3) . In a case where it is determined in Step S3 that no artist is selected (Step S3: NO), the processing unit 2 displays the artist list ATL continuously.

On the other hand, in a case where it is determined in Step S3 that an artist is selected (Step S3: YES), the processing unit 2 contracts and displays the artist information 20 of the unselected artist by and large (therefore, as a result, the object O moves left) (see Figs. 5 and 6), acquires the data of the list of albums of the selected artist from the recording unit 4 (Step S4), generates an album list AL according to the example using the acquired data and the music evaluation information acquired in Step S1, and displays the album list on the display D (Step S5) .

At this time, making an explanation on a display change in the display D from the selection of Step S3 up to the displaying of the album list AL of Step S5, first if the artist "eee" is selected by a touch operation to Position F as illustrated in Figs. 5 and 6 (see Step S3: YES), the artist information 20 of the unselected artist is contracted by and large and each object O included in the artist information 20 of the selected artist, and a jacket image 31 is temporarily displayed in a state where the object O included in the artist information 20 of the selected artist is attached the jacket photo of the album of the artist is viewed from an oblique angle. Thereafter, as more specifically illustrated in Fig. 7, album information 30 indicating the album of the selected artist is displayed to be dynamically developed together with the corresponding jacket image 31 and the object O. At this time, the jacket image 31 attached with the object O corresponds to an example of the "evaluation-added image" according to the application. More specifically, as illustrated in Fig. 7, the jacket image 31 and the album information 30 containing the corresponding object O are displayed to appear to rotate from right to left in Fig. 7 about the upward and downward (vertical) axis in Fig. 7 with the artist image 21 of the selected artist as the background for example. Then, in the finally displayed album list AL, the album information 30 containing the jacket image 31 and an album name 32 is displayed in a list format for each album of which the data is recorded in the recording unit 4 together with the artist name 22 of the artist as illustrated in Fig. 8. Then, in the album information 30 according to the example, objects OO1 to OO3 of a rod shape visually representing the music contained (included) in the album are contained. Further, in the following description, in a case where any one of the objects OO1 to OO3 is denoted, the object will be appropriately referred to as "object OO". At this time, each object OO corresponds to one music contained in the album. In addition, each object OO is displayed with the color indicating the evaluation on each music which is divided into three hierarchies on the basis of the music evaluation information acquired in Step S1. Then, the object OO1 is displayed with the color indicating music which obtains a highest evaluation, the object OO2 is displayed with the color indicating music which obtains a second highest evaluation, and the object OO3 is displayed with the color indicating music which obtains a third highest evaluation. Herein, the display color of each object OO is set to a color which makes the display color of the object OO1 most visible in relation with the background color of the album AL similarly to the object O, the display color of the object OO2 is set to a secondly visible color, and the display color of the object OO3 is set to a thirdly visible color. As a result, the number of pieces of music contained in the album and the evaluation on each music are displayed at the same time by each object OO. More specifically, in the album list AL illustrated in Fig. 8, for example, total 13 pieces of music contained in the album " 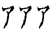 " are recorded in the recording unit 4. It can be seen at a glance that, among the music, six pieces of music with the highest evaluation are recorded, four pieces of music with the second highest evaluation are recorded, and three pieces of music with the third highest evaluation are recorded. In addition, similarly, total 15 pieces of music contained in the album " 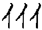 " are recorded in the recording unit 4. It can be seen at a glance that, among the music, eight pieces of music with the highest evaluation are recorded, six pieces of music with the second highest evaluation are recorded, and one piece of music with the third highest evaluation are recorded.

Further, in a case where it is not possible to display the objects OO as many as the number of pieces of music contained in the album in relation with a display region of the display D which can display the album information 30, the processing unit 2 displays Mark ON (see Figs. 8 and 9) represented "+" which means there is music which is not possible to be displayed (that is, the number of pieces of music exceeds the displayable number). Mark ON corresponds to an example of the "sub object" according to the application. In addition, the processing unit 2 displays the object O corresponding to the album itself with a color corresponding to the evaluation on the left side of an album image 30 of each album for example. The object O displayed on the left side of the album image 30 corresponds to an example of the "first evaluation object" according to the application.

Next, in a state where the album list AL illustrated in Fig. 8 is displayed (see Step S5), the processing unit 2 monitors whether any piece of album information 30 is selected by a user's touching operation for example (Step S6). In a case where it is determined in Step S6 that no album is selected (Step S6: NO), the processing unit 2 displays the album list AL continuously.

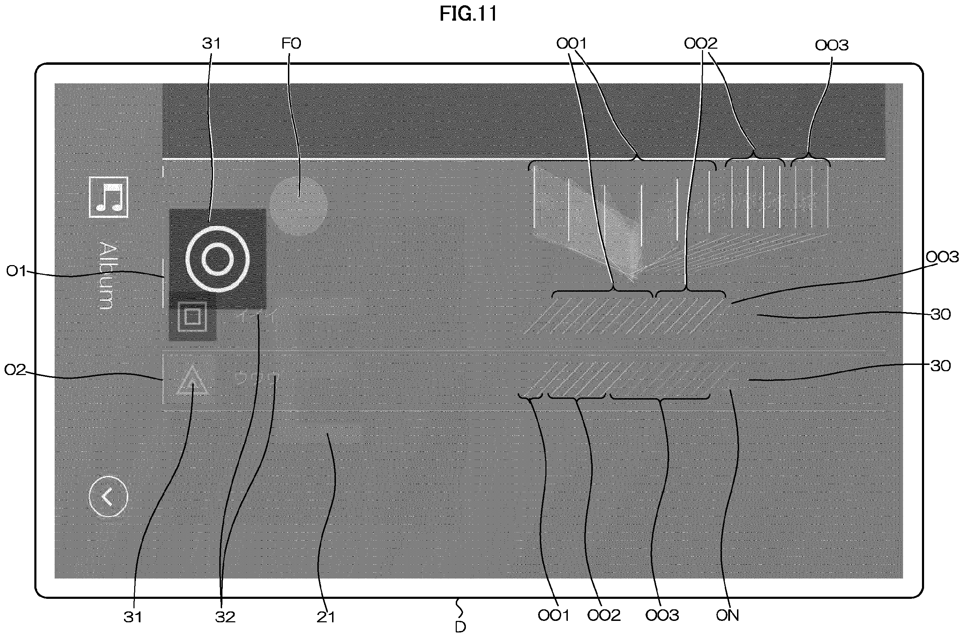

On the other hand, in a case where it is determined in Step S6 that an album is selected (Step S6: YES), the processing unit 2 then contracts and displays the album information 30 of the unselected album by and large (therefore, as a result, the object OO moves left) (see Figs. 10 and 11), acquires the data of the list of music of the selected album from the recording unit 4 (Step S7), generates an album list SL according to the example using the acquired data and the music evaluation information acquired in Step S1, and displays the music list on the display D (Step S8) .

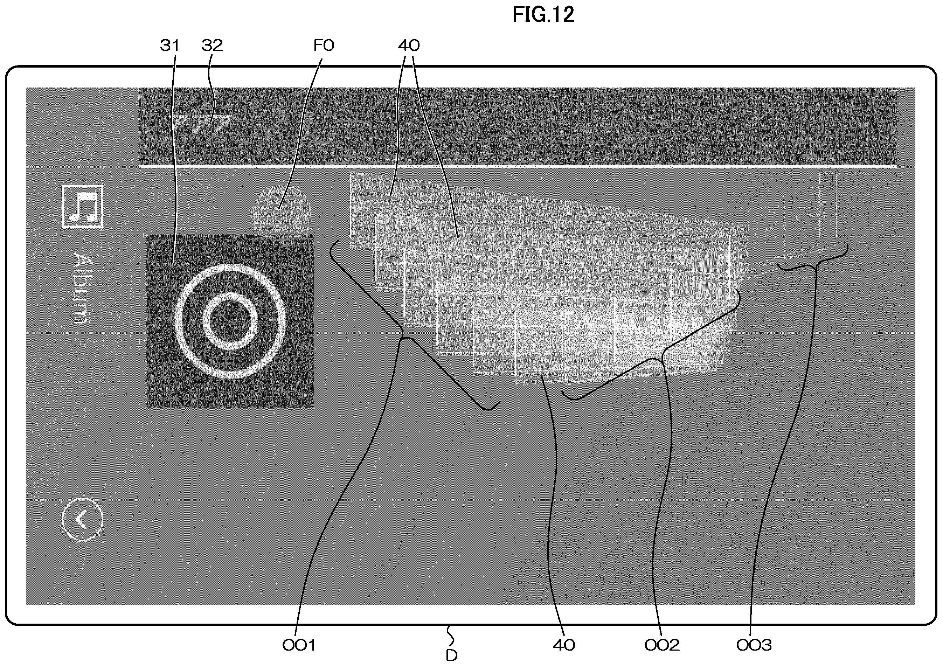

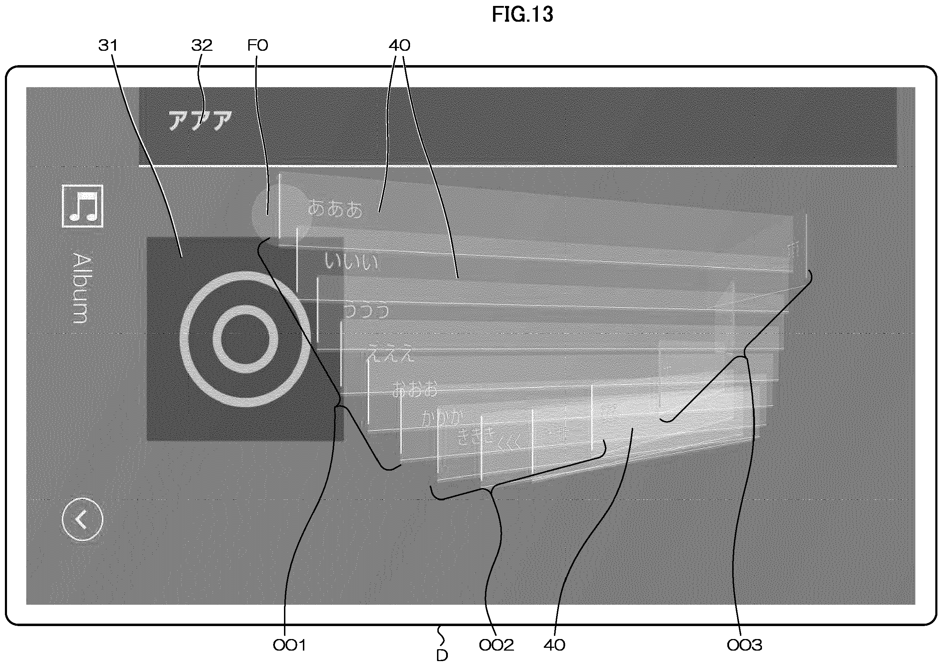

At this time, making an explanation on a display change in the display D from the selection operation of Step S6 up to the displaying of the music list SL of Step S8, first if the album "AAA" is selected by a movement of a finger or the like illustrated as Position F0 as illustrated in Figs. 8 and 9 (see Step S6: YES), the album information 30 of the unselected album is contracted by and large. In a state where the object OO contained in the album information 30 of the selected album is developed (expanded) (see Figs. 10 and 11), and the object OO is attached, music information 40 containing a music title and the like of the music in the album is displayed to be dynamically developed together with the corresponding music title and the object OO (see Figs. 12 and 13). More specifically, as illustrated in Figs. 12 and 13, the music title 42 and the music information 40 containing the corresponding object OO are displayed to appear to rotate from right to left in Figs. 12 and 13 about the upward and downward (vertical) axis in Figs. 12 and 13 with the album image 31 of the selected album as the background for example. Then, in the finally displayed music list SL, as illustrated in Fig. 14, the music information 40 containing the music title 42 is displayed in a list for each music of which the data is recorded in the recording unit 4 together with the album name 32 of the album. Then, the music information 40 according to the example includes evaluation data R indicating the evaluation on the music with the number of * marks for example. The evaluation data R indicates the evaluation based on the music evaluation information acquired in Step S1 described above. Further, the processing unit 2 displays the object OO corresponding to the music itself with a color corresponding to the evaluation on the left side of the music information 40 for example. The evaluation data R and the object OO displayed on the left side of the music information 40 correspond to an example of the "second evaluation object" according to the application. In addition, since the displaying mode (the number of ★ marks) of the evaluation data R and the displaying mode (rod shape) of the object O or the object OO are different, it is possible to easily recognize that the music whose evaluation is indicated by the evaluation data R is the lowest layer of the contents which is selected hierarchically as artist → album → music.

Next, in a state where the music list SL illustrated in Fig. 14 is displayed (see Step S8), the processing unit 2 monitors whether any piece of music information 40 is selected by a user's touching operation (Step S9) . In a case where it is determined in Step S9 that no music is selected (Step S9: NO), the processing unit 2 displays the music list SL continuously.

On the other hand, in a case where it is determined in Step S9 that any piece of music is selected (Step S9: YES), the processing unit 2 then acquires data of the selected music itself from the recording unit 4, and replays the data and emits the data from the speaker (not illustrated) (Step S10) .

Thereafter, for example, the processing unit 2 determines whether the display process according to the example ends when the power of the information processing apparatus 10 is turned off (Step S11). In a case where it is determined that the power is not turned off (Step S11: NO), the processing unit 2 returns to Step S1 described above and repeatedly performs the display process described above. On the other hand, in the determination of Step S11, in a case where the display process according to the example ends (Step S11: YES), the processing unit 2 ends the display process as it is.

As described above, according to the display process of the example, the evaluation information indicating the evaluation on the album (or music) related to the artist (or album) is acquired for each album (or music) (see Step S1 of Fig. 3). Then, the object O (or the object OO) which visually represents the evaluation on at least a part of the album (or music) and is provided as many as the album (or music) contained at least in the part, and the information indicating the artist (or album) to which the album (or music) relates are displayed on the display D in association with each other on the basis of the evaluation information. Therefore, the evaluation on the album (or music) related to the artist (or album) and the number can be quickly recognized at a glance.

In addition, the object O visually representing the evaluation is further displayed at a position of the corresponding display D on the basis of the album evaluation information indicating the evaluation on the album (see Fig. 8) . Therefore, the evaluation can also be quickly recognized at a glance together with the album information 30.

Further, in a case where a selection operation of the artist (or album) is received, the displaying of the artist information 20 (or the album information 30) and the object O (or the object OO) is dynamically switched to displaying of the detail information of the album (or music) related to the artist (or album) which is a target of the selection operation, and the detail information and the object O (or the object OO) visually representing the evaluation on the album (or music) in which the detail information are displayed in association with each other. Therefore, the details of the album (or music) and the evaluation can be quickly recognized at a glance.

Further, the region on the display D which includes the artist information 20 (or the album information 30) indicating the unselected artist (or album) and the object O (or the object OO) corresponding to the album (or music) related to the artist information is contracted smaller than before selecting the artist (or album) and displayed. Therefore, it is possible to more clearly recognize the selected artist (or album).

In addition, in a case where the number of albums (or music) related to the artist (or album) exceeds the displayable number of objects O (or the objects OO), the number of albums (or music) related to the artist (or album) can be quickly recognized at a glance as long as Mark ON visually representing the excess is further displayed at a position corresponding to the object O (or the object OO) corresponding to the album (or music) in which the number exceeds the displayable number.

Further, the artist information 20 indicating the artist is listed according to attributes (see Fig. 4), and the object O visually representing the evaluation on the album related to the artist is attached to the album image 31, and displayed at a position corresponding to the display position of the artist information 20 on the basis of the related album evaluation information (see Figs. 5 and 6). Therefore, the evaluation of the album related to the artist can be recognized together with the album image 31.

Further, the object O or the object OO is an object of a line segment with a color corresponding to the visually represented evaluation, so that it is possible to visually recognize the evaluation on the album or the music without a wide display region.

In addition, the color of the object O or the object OO has a high visibility as the evaluation on the background color of the display position is high. Therefore, it is possible to easily recognize the existence of a highly evaluated album or music.

Further, since the artist (or album) is a superior content to the related album (or music), the evaluation and the number of the albums (or music) at an inferior level to the artist (or album) can be easily recognized together with the relation to the artist (or album) in the hierarchy contents.

Further, the album evaluation information and the music evaluation information in the above example may be independently recorded in the recording unit 4. In addition, the evaluation on the album may be based on the evaluation on the music related thereto. Alternatively, the evaluation on the album may be based on the accumulated evaluation on the music related thereto, or an average value of the evaluation on the music may be set as the evaluation on the album. Further, a category of the evaluation on the album or the music (a category corresponding to each of the objects O or the objects OO) may be based on a threshold arbitrarily set by a user of the information processing apparatus 10. In any of these cases, it is possible to accurately represent the evaluation on the album or the music.

In addition, in the above example, the display order of the object O or the object OO is set for each category of the evaluation. However, for example, the display order may be set to be an order of music contained in the album.

Further, the above example has been described about a case where the embodiment is applied to the display control for the selection (that is, the selection of contents of three hierarchies) of the music contained in the album of the artist. However, the embodiment is applicable to a display control for the selection of contents of four or more hierarchies.

Further, a program corresponding to the flowchart illustrated in Fig. 3 is recorded in a recording medium such as an optical disk or a hard disk, or acquired through a network such as the Internet, and is read out to a general-purpose microcomputer or the like to be executed, so that the microcomputer or the like may be used as the processing unit 2 according to the example.

### Reference Signs List

- 1: acquisition means (interface)
- 2: control means (processing unit)
- 10: information processing apparatus
- 20: artist information
- 30: album information
- 31: album image
- 40: music information
- D: display means (display)
- S: display control apparatus
- O1, O2, O3, OO1, OO2, OO3: object

## Claims

1. A display control apparatus, comprising:
an acquisition means which acquires evaluation information indicating evaluation on a second content related to a first content for each second content; and
a control means which displays objects which visually and respectively represent the evaluation indicated by the evaluation information with respect to at least a part of the second content, the number of the objects corresponding to the number of the second contents contained in the at least a part, and first content information indicating the first content related to the second content in a display means in association with each other.

2. The display control apparatus according to claim 1, wherein
the acquisition means further acquires first content evaluation information which indicates evaluation on the first content, and
the control means further displays a first evaluation object which visually represents the evaluation on the first content at a position of the display means corresponding to the first content information on the basis of the acquired first content evaluation information.

3. The display control apparatus according to claim 2,
wherein the evaluation on the first content is based on the evaluation on the second content related to the first content.

4. The display control apparatus according to any one of claims 1 to 3, further comprising
a reception means which receives a selection operation of the first content,
wherein the control means is configured to
i) dynamically switch, in a case where the selection operation is received, displaying of the first content information and the object in the display means to displaying of detail information indicating details of the second content related to the first content which is a target of the received selection operation, and
ii) cause the display means to display the detail information and a second evaluation object visually representing the evaluation on the second content of which the detail information is displayed in association with each other.

5. The display control apparatus according to claim 4,
wherein the control means contracts a region on the display means more than before the selection and displays the region which includes the first content information indicating an unselected first content of the first content displayed in the display means together with the selected first content of the first content other than the first content selected by the selection operation, and the object corresponding to the second content related to the unselected first content.

6. The display control apparatus according to any one of claims 1 to 5,
wherein, in a case where the number of the second contents related to the first content exceeds a displayable number of the objects in the display means, the control means further displays a sub object which visually represents the excess at a position of the display means corresponding to the object corresponding to the second content of which the number exceeds the displayable number.

7. A display control apparatus, comprising:
a first control means which lists first content information indicating a first content in a display means according to an attribute of the first content;
an acquisition means which acquires evaluation information indicating evaluation on a second content related to the first content for each second content; and
a second control means which displays an evaluation-added image in which an object visually representing the evaluation on the second content related to the first content represented by the displayed first content information is added to an image indicating the second content on the basis of the acquired evaluation information at a position of the display means corresponding to a display position of the first content information.

8. The display control apparatus according to claim 7, wherein
the first content information is information indicating an artist,
the second content is an album of the artist, and
the image is an image of a jacket photo of the album.

9. The display control apparatus according to any one of claims 1 to 8,
wherein the object is an object of a line segment of a color corresponding to the evaluation which is visually represented by the object.

10. The display control apparatus according to any one of claims 1 to 9,
wherein a color of the object is increased in visibility as the evaluation on the second content which is visually represented by the object is increased with respect to a background color of a display position of the object in the display means.

11. The display control apparatus according to any one of claims 1 to 10,
wherein the first content is a superior content to the second content related to the first content.

12. A display control method which is performed in a display control apparatus which includes an acquisition means and a control means, and is connected to a display means, comprising:
an acquisition step of acquiring, by an acquisition means, evaluation information indicating evaluation on a second content related to a first content for each second content; and
a control step of displaying, by a control means, objects which visually and respectively represent the evaluation indicated by the evaluation information with respect to at least a part of the second content, the number of the objects corresponding to the number of the second contents contained in the at least a part, and first content information indicating the first content related to the second content in a display means in association with each other.

13. A display control method which is performed in a display control apparatus, the display control apparatus comprising a first control means, an acquisition means, and a second control means, and being connected to a display means,
the method comprising:
a first control step of listing, by the first control means, first content information indicating a first content in the display means according to an attribute of the first content;
an acquisition step of acquiring, by the acquisition means, evaluation information indicating evaluation on a second content related to the first content for each second content; and
a second control step of displaying, by the second control means, an evaluation-added image in which an object which visually represents the evaluation on the second content related to the first content represented by the displayed first content information is added to an image indicating the second content on the basis of the acquired evaluation information at a position of the display means corresponding to a display position of the first content information.

14. A display control program which causes a computer connected to a display means to serve as the display control apparatus according to any one of claims 1 to 11.
